# EUROPEAN PATENT SPECIFICATION

(11) **EP 3 890 912 B1**
(45) Date of publication and mention of the grant of the patent: **06.09.2023**
(21) Application number: 19794924.1
(22) Date of filing: 21.10.2019
(51) Int. Cl.: B23D 61/00, B27B 19/00

(54) **SAW BLADE FOR AN OSCILLATING TOOL**
SÄGEBLATT FÜR EIN SCHWINGENDES WERKZEUG
LAME DE SCIE POUR UN OUTIL OSCILLANT

(30) Priority: 06.12.2018 SE 1851516
(43) Date of publication of application: 13.10.2021
(73) Proprietor: Innovolante AB, 97753 Luleå (SE)
(72) Inventor: LINDQVIST, Lennart, 972 35 Luleå (SE)
(74) Representative: Noréns Patentbyrå AB
(86) International application number: PCT/EP2019/078560
(87) International publication number: WO 2020/114663

(56) References cited:
- EP-A1- 3 213 847
- WO-A1-2011/044615
- WO-A1-2019/152408
- WO-A2-2007/045993
- CN-A- 104 249 189
- DE-U1-202013 004 984
- US-A1- 2015 273 706
- US-A1- 2017 291 238

## Description

### FIELD OF THE INVENTION

The invention relates to a saw blade for an oscillating tool, said saw blade being intended to be mounted, in use, on a drive member of the oscillating tool. The saw blade comprises:
- a mounting portion being adapted to be operatively connected to the drive member of the oscillating tool, and
- a supporting portion extending in a first direction from the mounting portion to an active blade portion being provided with saw teeth, said supporting portion having a supporting edge serving to be supported and abutting against a surface of a work-piece during use.

### BACKGROUND OF THE INVENTION AND PRIOR ART

Such a saw blade for an oscillating tool is previously known from the US patent specification 9,027,452 (Nagy et al, patentee Robert Bosch GmbH). Accordingly, this saw blade has a supporting portion extending in a first direction away from the mounting portion to an active blade portion provided with saw teeth. This supporting portion has a supporting edge, which forms a support during use of the saw blade and abuts against a work-piece. On the same side as the supporting edge the active blade portion projects in a direction being substantially at right angle to the first direction, the teeth of the active blade portion facing backwards towards the mounting portion, so that it is possible to move, during use, the saw blade backwards while the teeth of the active blade portion oscillate back and forth with a high frequency so that a saw cut is formed in the work-piece.

The supporting edge of the supporting portion ensures that, during sawing, the cutting depth in the saw cut will be substantially constant. According to the above US specification, the saw blade may also be provided with a front cutting edge facing substantially away from the mounting portion. By means of the front cutting edge the saw blade can be used to make a saw cut in the work-piece by feeding the oscillating tool with its saw blade in a forward direction, in the above mentioned first direction.

During recent years similar saw blades for an oscillating tool have been developed in various ways, and similar saw blades have been disclosed in US 2016/0082605 A1 (Work Tools Inc.), EP 229511 A1 (WS Engineering GmbH Company KG) and EP 3213847 A1 (Wolfkraft GmbH).

A saw blade according to the preamble of claim 1 is known from WO 2007/045993 A2.

### OBJECT OF THE INVENTION

Against this background, the present invention aims at achieving a saw blade which enables sawing of a saw cut having different depths in a work-piece, namely a first cutting depth, and a second cutting depth which differs from the first cutting depth, in particular having double the depth, as compared to the first cutting depth.

Such a feature has turned to be very important, for example when making holes in walls or breaking down wall structures, in particular walls structures with a surface layer of plaster boards. Then, it is desirable to avoid damaging underlying beams or installations, such as water conduits or electric cables.

### SUMMARY OF THE INVENTION

The above stated object will be achieved with a saw blade as defined by the features of claim 1, in particular a saw blade having an active blade portion with first and second cutting elements projecting sideways and extending in substantially opposite directions from each respective supporting edge, the first cutting element having a first projecting length, whereas the other cutting element has a second projecting length being different from the first projecting length, the first and second projecting length being measured from each respective supporting edge of the supporting portion.

By this structure of the active blade portion it is easy to select the depth of the saw cut by simply turning the tool with its saw blade about 180°, so that the other cutting element is made operative instead.

Here it is advantageous if the second cutting element has a second projecting length which is about double the projecting length of the first cutting element.

Various favorable embodiments are defined in the appended claims 2-9.

An especially advantageous embodiment will be achieved if an end portion of each cutting element is provided with saw teeth, preferably with at least three teeth along an end edge which is substantially parallel to the above mentioned first direction. In this way, it will be easy to make a hole in a work-piece, without using a drilling machine or some other special tool.

The invention will now be explained more fully with reference to the appended drawing illustrating a preferred embodiment of the saw blade according to the invention.

### BRIEF DESCRIPTION OF THE DRAWING

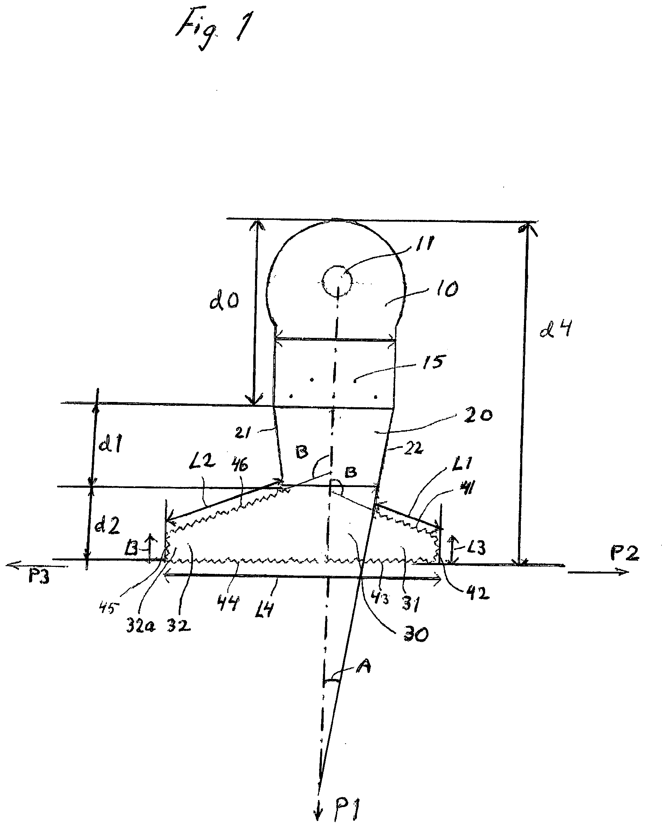

On the drawing, Fig. 1 shows schematically, from above, a saw blade according to the invention.

### DETAILED DESCRIPTION OF A PREFERRED EMBODIMENT OF THE INVENTION

The saw blade shown in Fig. 1 comprises essentially three parts, viz. a mounting portion 10, a supporting portion 20 and an active blade portion 30. In a way known *per see,* the saw blade is made of a rigid, very hard material, for example hardened steel or a so-called hard metal. The saw blade may be formed in one piece or in two parts which are joined by rivets or spot welds 15 in the region between the mounting portion 10 and the support portion 20. The saw blade may be formed in one and the same plane or may have a transition region in the vicinity of the joining region at the spot welds 15 extending outwardly or inwardly from the drawing plane, so that the supporting portion 20 and the active blade portion 30 will lie in a somewhat displaced plane which is parallel to the plane of the mounting portion 10.

The mounting portion 10 has a central hole 11 and also a number of surrounding holes and recesses (not illustrated on the drawing) which are formed and adapted to engage with a drive member of an oscillating tool. The design of the holes and recesses of the mounting portion is standardized and will fit with a number of different oscillating apparatuses being available on the market. When the saw blade has been mounted onto such an apparatus, the saw blade will make a reciprocating movement at a relatively high frequency, such as 5000-25000 oscillations per minute with a oscillating angle between e.g. 0.5°-7°. The reciprocating movement is then directed substantially at right angle to the main extension in the longitudinal direction of the saw blade (arrow P1 in Fig. 1), thus in the opposite directions P2 and P3 in Fig. 1.

The supporting portion 20 of the saw blade extends along the direction P1 and has a length d1 of about 25 mm in the preferred embodiment. The length d0 of the mounting portion 10, including the joining portion with the spot welds 15 is about 54 mm in this embodiment.

The supporting portion 20 has support or side edge portions 21, 22, which converge somewhat in the direction of the arrow P1 and form a small angle A of 1°-30°, preferably about 10°-15°, with the main direction P1 of the supporting portion. When using the saw blade, these supporting edges 21, 22 will abut the work-piece.

The active blade portion 30 according to the invention has two cutting elements 31 and 32 projecting in opposite directions P2 and P3 and are provided with a plurality of saw teeth 41, 42, 43, 44, 45 and 46 arranged in different rows.

The cutting element 30 has a projecting length L1, which in the illustrated embodiment is about 14 mm but which may be in the interval 10-25 mm depending on the desired cutting depth. The second cutting element 32, extending in the opposite direction P3, has a projecting length L2 of about 27 mm in the illustrated example, viz. about double the length of the first cutting element 31. The projecting length of the second cutting element may be in the interval 20-50 mm, depending on the desired cutting depths, corresponding approximately to double the length of the first cutting element 31.

As appears from Fig. 1, the saw teeth rows 41, 46 of the first and second cutting elements 31, 32 extend substantially at right angle to each respective supporting edge 22 and 21 of the supporting portion 20, and the projecting length L1 and L2 are measured from these supporting edges 22, 21. These saw teeth rows 41, 46 form rear cutting edges, which face substantially towards the mounting portion 10. This cutting element may form an angle B of about 90°-135°, with the main direction P1 of the supporting portion. Preferably, this angle is about 110°-120°.

When using the saw blade, the saw teeth row 41 or 46, forming a rear cutting edge, may be utilized by feeding the whole saw blade in an opposite direction relative to P1, viz. in such a way that the cutting elements 31 or 32 are moved backwards while making a saw cut in the work-piece.

Each cutting element 31, 32 also has a front saw teeth row 43, 44 for a front cutting edge on the part of the active plane portion facing away from the mounting portion. These two saw teeth rows 43, 44 form a joint saw teeth row or front cutting edge extending at right angle to the direction P1 of the supporting portion. This joint saw teeth row 43, 44 may be utilized by feeding the saw blade forwardly in the direction of the arrow P1.

As appears from Fig. 1, each cutting element 31, 32 forms an end portion 31a and 32a respectively, having an outer end edge, which is substantially parallel to the main direction or first direction P1 of the supporting portion. These end edges of the end portions 31a, 32a are also provided with saw teeth 42 and 45, respectively. Preferably, each end portion has at least three teeth along the respective end edge. Each end edge has a length L3 of preferably 5-15 mm, in particular about 10 mm, so that it is possible to initiate a hole in the work-piece by contacting the end edge provided with teeth against the work-piece. Thus, it is not necessary to use a drilling machine or any other tool to make a hole in a plaster board, for example.

In the illustrated embodiment, the saw teeth row 43, 44 being common to the cutting elements 31, 32 is about 68 mm long, but this length L4 may in general be in the interval 50-80 mm.

The total length d4 of the saw blade is 104 mm in the illustrated embodiment, but this length d4 may vary within the interval 90-120 mm.

It has turned out that the saw blade according to the invention, with its cutting elements facing in opposite directions, is very useful for making holes and breaking down walls with plaster boards, for example. Thus, it is possible to use one of the cutting blades 31 when sawing in a single wall, which has a thickness of 13 mm, and when sawing in a wall with double plaster boards, having a total thickness of 26 mm, it is possible to use the other cutting element 32. In both cases the saw depth will correspond exactly to the thickness of the board of the wall. In this way the underlying structure or installations will not be damaged.

It is of course possible to use many different combinations of projecting length L1 and L2 whereby it is sufficient to use half as many saw blades for different cutting depths.

The exact shape of the saw blade may of course be modified within the scope of the appended claims.

The material of the saw blade may also be adapted to different kinds of work-pieces.

## Claims

1. A saw blade for an oscillating tool, the saw blade being intended to be mounted, in use, on a drive member of the oscillating tool, the saw blade comprising:
- a mounting portion (10,15) being adapted to be operatively connected to said drive member of the oscillating tool, and
- a supporting portion (20) extending in a first direction (P1) from the mounting portion to an active blade portion (30) being provided with saw teeth, said supporting portion having two supporting edges (21,22) serving to be supported and abutting against a surface of a work-piece during use, wherein said active blade portion (30) has first and second cutting elements (31, 32) projecting sideways and extending in substantially opposite directions from each respective supporting edge (21, 22) of said supporting portion (20), **characterized in that**
- said first cutting element (31) has a first projecting length (L1),
- said second cutting element (32) has a second projecting length (L2) which differs from said first projecting length (L1),
- said first and second projecting lengths (L1, L2) are measured from each respective supporting edge (21, 22) of said supporting portion (20),
- each of said first and second cutting elements has a rear cutting edge (41, 46) which faces substantially backwards towards said mounting portion (10, 15) and a front cutting edge (43, 44) which faces substantially away from said mounting portion, and
- said rear and front cutting edges of each cutting element converge towards an end portion (42, 45) being situated at a lateral distance from each respective supporting edge (22, 21) of said supporting portion, said lateral distance corresponding to said first and said second projecting length (L1, L2), respectively.

2. A saw blade according to claim 1, wherein
- said supporting portion (20) and said first and second cutting elements (31, 32) are substantially planar and extend in a common plane.

3. A saw blade according to claim 1 or 2, wherein
- said second projecting length (L2) of said second cutting element (32) is about double the first projecting length (L1) of said first cutting element (31).

4. A saw blade according to any one of claims 1-3, wherein
- said rear and front cutting edges and said end portion of each cutting element are provided with saw teeth.

5. A saw blade according to claim 4, wherein
- said end portion (42, 45) of each cutting element has at least three teeth along an end edge which is substantially parallel to said first direction (P1).

6. A saw blade according to claim 4 or 5, wherein
- said front cutting edge of each cutting element (31, 32) forms a straight, common cutting edge portion (43, 44) extending substantially at right angle to said first direction (P1) of said supporting portion (20).

7. A saw blade according to anyone of claims 1-6, wherein
- said rear cutting edge (41, 46) of each cutting element (31, 32) forms an angle (B) of 90°-135° with said first direction (P1) of said supporting portion (20).

8. A saw blade according to anyone of the preceding claims, wherein
- each of said supporting edges (21, 22) of said supporting portion (20) converge, along a second direction, at an angle (A) of 1°-30° with said first direction (P1) of said supporting portion (20).

9. A saw blade according to anyone of the preceding claims, wherein
- said first projecting length (L1) is in the interval 10-25 mm, whereas
- said second projecting length (L2) is the interval 20-50 mm.

## Patentansprüche

1. Sägeblatt für ein schwingendes Werkzeug, wobei beabsichtigt ist, dass das Sägeblatt im Gebrauch an einem Antriebsglied des schwingenden Werkzeugs angebracht ist, wobei das Sägeblatt umfasst:
- einen Anbringungsabschnitt (10, 15), der dazu geeignet ist, betriebsfähig mit dem Antriebsglied des schwingenden Werkzeugs verbunden zu sein, und
- einen Stützabschnitt (20), der in einer ersten Richtung (P1) vom Anbringungsabschnitt zu einem aktiven Blattabschnitt (30), welcher mit Sägezähnen versehen ist, verläuft, wobei der Stützabschnitt zwei Stützkanten (21, 22) aufweist, die dazu dienen, während des Gebrauchs durch eine Oberfläche eines Werkstücks gestützt zu werden und daran anzustoßen,
wobei der aktive Blattabschnitt (30) ein erstes und ein zweites Schneidelement (31, 32) aufweist, die seitwärts vorstehen und in im Wesentlichen entgegengesetzten Richtungen von jeder jeweiligen Schneidkante (21, 22) des Stützabschnitts (20) verlaufen, **dadurch gekennzeichnet, dass**
- das erste Schneidelement (31) eine erste Vorsprungslänge (L1) aufweist,
- das zweite Schneidelement (32) eine zweite Vorsprungslänge (L2) aufweist, die von der ersten Vorsprungslänge (L1) abweicht,
- die erste und die zweite Vorsprungslänge (L1, L2) ab jeder jeweiligen Schneidkante (21, 22) des Stützabschnitts (20) gemessen werden,
- jedes des ersten und des zweiten Schneidelements eine hintere Schneidkante (41, 46), die im Wesentlichen nach hinten zum Anbringungsabschnitt (10, 15) hin gekehrt ist, und eine vordere Schneidkante (43, 44) aufweist, die im Wesentlichen vom Anbringungsabschnitt weg gekehrt ist, und
- die hintere und die vordere Schneidkante jeden Schneidelements zu einem Endabschnitt (42, 45) hin konvergieren, der in einem seitlichen Abstand zu jeder jeweiligen Stützkante (22, 21) des Stützabschnitts angeordnet ist, wobei der seitliche Abstand der ersten bzw. der zweiten Vorsprungslänge (L1, L2) entspricht.

2. Sägeblatt nach Anspruch 1, wobei
- der Stützabschnitt (20) und das erste und das zweite Schneidelement (31, 32) im Wesentlichen plan sind und in einer gemeinsamen Ebene verlaufen.

3. Sägeblatt nach Anspruch 1 oder 2, wobei
- die zweite Vorsprungslänge (L2) des zweiten Schneidelements (32) ungefähr das Doppelte der ersten Vorsprungslänge (L1) des ersten Schneidelements (31) beträgt.

4. Sägeblatt nach einem der Ansprüche 1 bis 3, wobei
- die hintere und die vordere Schneidkante und der Endabschnitt jeden Schneidelements mit Sägezähnen versehen sind.

5. Sägeblatt nach Anspruch 4, wobei
- der Endabschnitt (42, 45) jeden Schneidelements zumindest drei Zähne entlang einer Endkante aufweist, die im Wesentlichen parallel zur ersten Richtung (P1) ist.

6. Sägeblatt nach Anspruch 4 oder 5, wobei
- die vordere Schneidkante jeden Schneidelements (31, 32) einen geraden, gemeinsamen Schneidkantenabschnitt (43, 44) ausbildet, der im Wesentlichen in einem rechten Winkel zur ersten Richtung (P1) des Stützabschnitts (20) verläuft.

7. Sägeblatt nach einem der Ansprüche 1 bis 6, wobei
- die hintere Schneidkante (41,46) jeden Schneidelements (31,32) einen Winkel (B) von 90° bis 135° zur ersten Richtung (P1) des Stützabschnitts (20) bildet.

8. Sägeblatt nach einem der vorhergehenden Ansprüche, wobei
- jede der Stützkanten (21, 22) des Stützabschnitts (20) entlang einer zweiten Richtung in einem Winkel (A) von 1° bis 30° zur ersten Richtung (P1) des Stützabschnitts (20) konvergiert.

9. Sägeblatt nach einem der vorhergehenden Ansprüche, wobei
- die erste Vorsprungslänge (L1) im Intervall von 10 bis 25 mm liegt, während
- die zweite Vorsprungslänge (L2) das Intervall von 20 bis 50 mm ist.

## Revendications

1. Lame de scie pour un outil oscillant, la lame de scie étant destinée à être montée, en utilisation, sur un organe d'entraînement de l'outil oscillant, la lame de scie comprenant :
- une partie de montage (10, 15) qui est adaptée pour être reliée de manière fonctionnelle audit organe d'entraînement de l'outil oscillant, et
- une partie de support (20) s'étendant dans une première direction (P1) à partir de la partie de montage jusqu'à une partie lame active (30) qui est pourvue de dents de scie, ladite partie de support ayant deux bords de support (21, 22) servant à être supportés et venant buter contre une surface d'une pièce à usiner durant l'utilisation,
dans laquelle ladite partie lame active (30) a des premier et second éléments de coupe (31, 32) faisant saillie de biais et s'étendant dans des directions sensiblement opposées par rapport à chaque bord de support (21, 22) respectif de ladite partie de support (20), **caractérisée en ce que**
- ledit premier élément de coupe (31) a une première longueur de saillie (L1),
- ledit second élément de coupe (32) a une seconde longueur de saillie (L2) qui diffère de ladite première longueur de saillie (11),
- lesdites première et seconde longueurs de saillie (L1, L2) sont mesurées à partir de chaque bord de support (21, 22) respectif de ladite partie de support (20),
- chacun desdits premier et second éléments de coupe a un bord de coupe arrière (41, 46) qui fait face sensiblement vers l'arrière vers ladite partie de montage (10, 15) et un bord de coupe avant (43, 44) qui est sensiblement à l'opposé de ladite partie de montage, et
- lesdits bords de coupe arrière et avant de chaque élément de coupe convergent vers une partie d'extrémité (42, 45) qui est située à une distance latérale de chaque bord de support (22, 21) respectif de ladite partie de support, ladite distance latérale correspondant à ladite première et à ladite seconde longueur de saillie (L1, L2), respectivement.

2. Lame de scie selon la revendication 1, dans laquelle
- ladite partie de support (20) et lesdits premier et second éléments de coupe (31, 32) sont sensiblement plats et s'étendent dans un plan commun.

3. Lame de scie selon la revendication 1 ou 2, dans laquelle
- ladite seconde longueur de saillie (L2) dudit second élément de coupe (32) est d'environ le double de la première longueur de saillie (L1) dudit premier élément de coupe (31).

4. Lame de scie selon l'une quelconque des revendications 1 à 3, dans laquelle
- lesdits bords de coupe arrière et avant et ladite partie d'extrémité de chaque élément de coupe sont pourvus de dents de scie.

5. Lame de scie selon la revendication 4, dans laquelle
- ladite partie d'extrémité (42, 45) de chaque élément de coupe a au moins trois dents le long d'un bord d'extrémité qui est sensiblement parallèle à ladite première direction (P1) .

6. Lame de scie selon la revendication 4 ou 5, dans laquelle
- ledit bord de coupe avant de chaque élément de coupe (31, 32) forme une partie bord de coupe (43, 44) rectiligne, commune, s'étendant sensiblement à angle droit avec ladite première direction (P1) de ladite partie de support (20).

7. Lame de scie selon l'une quelconque des revendications 1 à 6, dans laquelle
- ledit bord de coupe arrière (41, 46) de chaque élément de coupe (31, 32) forme un angle (B) de 90° à 135° avec ladite première direction (P1) de ladite partie de support (20).

8. Lame de scie selon l'une quelconque des revendications précédentes, dans laquelle
- chacun desdits bords de support (21, 22) de ladite partie de support (20) converge, le long d'une seconde direction, à un angle (A) de 1° à 30° avec ladite première direction (P1) de ladite partie de support (20) .

9. Lame de scie selon l'une quelconque des revendications précédentes, dans laquelle
- ladite première longueur de saillie (Ll) est dans l'intervalle 10 à 25 mm, alors que
- ladite seconde longueur de saillie (L2) est dans l'intervalle 20 à 50 mm.
